(19) **Europäisches Patentamt**
**European Patent Office**
**Office européen des brevets**

(11) **EP 1 747 482 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
**G01T 1/40** (2006.01)    **G01T 1/208** (2006.01)

(21) Anmeldenummer: **04741543.5**

(22) Anmeldetag: **10.05.2004**

(86) Internationale Anmeldenummer:
**PCT/EP2004/050754**

(87) Internationale Veröffentlichungsnummer:
**WO 2005/116692 (08.12.2005 Gazette 2005/49)**

(54) **STABILISIERUNG EINES SZINTILLATIONSDETEKTORS**

STABILIZATION OF A SCINTILLATION DETECTOR

STABILISATION D'UN DETECTEUR DE SCINTILLATION

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**31.01.2007 Patentblatt 2007/05**

(73) Patentinhaber: **FLIR Detection, Inc.**
**Wilsonville, Oregon 97070-8238 (US)**

(72) Erfinder:
• **STEIN, Jürgen**
  **42349 Wuppertal (DE)**
• **PAUSCH, Guntram**
  **01099 Dresden (DE)**

(74) Vertreter: **Kitzler, Michael**
**IPQ IP Specialists AB**
**Docketing**
**PO Box 42**
**683 21 Hagfors (SE)**

(56) Entgegenhaltungen:
**EP-A- 0 965 861**

• **PATENT ABSTRACTS OF JAPAN Bd. 018, Nr. 654 (P-1841), 12. Dezember 1994 (1994-12-12) -& JP 06 258446 A (TOSHIBA CORP), 16. September 1994 (1994-09-16)**
• **SCHWEITZER J S ET AL: "TEMPERATURE DEPENDENCE OF NAI(TL) DECAY CONSTANT" IEEE TRANS NUCL SCI FEB 1982, Bd. NS-30, Nr. 1, Februar 1982 (1982-02), Seiten 380-382, XP008042568 in der Anmeldung erwähnt**
• **"preface" In: S.S.Kapoor, V.S.Ramamurthy: "Nuclear Radiation Detectors", 31 December 2008 (2008-12-31), New Age International (P) Ltd., India ISBN: 0852264968 page 1,214,215,**
• **Canberra: "Model 2022 Spectroscopy Amplifier", 31 December 2003 (2003-12-31), Canberra Inc., USA**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung bezieht sich auf ein Verfahren zur Stabilisierung der von einem Szintillationsdetektor zur Messung von Strahlung, bevorzugt ionisierender Strahlung, durch die im Detektor zumindest teilweise absorbierte Strahlung erzeugten und von der Betriebstemperatur des Detektors abhängigen Signale, sowie auf einen Detektor zur Messung von Strahlung, bevorzugt ionisierender Strahlung, Siehe JP 06258446.

Entsprechende Verfahren und Detektoren sind im Stand der Technik bekannt. Ein Szintillator im Szintillationsdetektor absorbiert die zu messende Strahlung, wobei angeregte Zustände im Szintillator entstehen. Diese angeregten Zustände zerfallen mit einer Zerfallszeit unter Emission von Licht, wobei die Lichtmenge ein Mass für die absorbierte Energie der einfallenden Strahlung ist. Das Licht wird zur einer Fotokathode geführt, die in Abhängigkeit der dort absorbierten Lichtmenge Elektronen emittiert, die regelmäßig mit einem Fotomultiplier verstärkt werden. Das Ausgangssignal des Fotomultipliers ist somit ein Mass für die absorbierte Gesamtenergie der Strahlung.

Es ist bekannt, dass die Lichtausbeute des Szintillators von dessen Temperatur abhängt, so dass auch das der gemessenen Energie proportionale Ausgangssignal von der Temperatur des Szintillators abhängt. Da es häufig nicht möglich ist, den Szintillationsdetektor bei konstant bekannter Temperatur zu betreiben, ist die Messgenauigkeit des Detektors durch Temperaturschwankungen erheblich beeinträchtigt.

Nach dem bekannten Stand der Technik wird dies durch eine vor oder nach der Messung durchgeführte Kalibrierung erreicht, wobei eine so genannte Kalibrierungsquelle, also ein Strahlungsquelle mit bekannter Strahlungsenergie, zur Kalibrierung, verwendet wird. Alternativ oder zusätzlich kann auch eine Kalibrierung anhand von im gemessenen Spektrum vorhandenen bekannten Linien bekannter Energie erfolgen.

Dies hat den Nachteil, dass die zwischen dem Zeitpunkt der Kalibrierung und dem Zeitpunkt der Messung auftretenden Temperaturschwankungen zu einer zusätzlichen Messgenauigkeit führen. Insbesondere bei Detektoren, die unter wechselnden äußeren Bedingungen, vor allem ausserhalb eines Labors, eingesetzt werden, ist dieser Nachteil gravierend. Weiterhin ist gerade in der Sicherheitstechnik - im Gegensatz zu klassischen Forschungsanwendungen - häufig davon auszugehen, dass nicht genügend Linien (vorher) bekannter Energie im Spektrum vorhanden sind, so dass zunächst das gemessene Spektrum ausgewertet werden muss, um eine Zuordnung bestimmter Energien zu einzelnen gemessenen Linien vornehmen zu können. Dies ist wegen möglicher falscher Zuordnungen Fehler anfällig. Da das Sicherheitspersonal häufig keine kernphysikalische Kenntnisse hat, fällt zudem auch die Zuordnung einzelner Linien des gemessenen Spektrums zu bestimmten bekannten Energien zusätzlich schwer.

Die Patentanmelderin hat darauf hin einen Szintillationsdetektor und ein Verfahren zum Betreiben eines derartigen Detektors entwickelt, bei dem die bekannte Energie einer Eichquelle während der Messung mit erfasst und der Detektor kontinuierlich, bzw. in gewissen, vergleichbar kurzen Abständen während der Messung mit der bekannten Energie der Strahlung der Eichquelle geeicht wird. Damit ist es auch für Personen ohne physikalische Kenntnisse möglich, ein Spektrum ionisierender Strahlung mit hoher Genauigkeit zu erfassen.

Die Strahlung in dem Energiebereich der von der Eichquelle emittierten Strahlung wird jedoch von eben dieser Strahlung der Eichquelle überlagert und daher nicht optimal gemessen. Führt man die Eichung mit diesem Detektor dagegen nicht kontinuierlich, sondern, alternativ, nur in größeren Zeitabständen durch, kann zwar auch Strahlung im Energiebereich der Eichquelle gemessen werden, allerdings wird gleichzeitig die Energieauflösung durch nicht erfassbare Temperaturschwankungen schlechter. Es ist also prinzipiell nur schwer möglich, eine hohe Energieauflösung durch kontinuierliche Eichung bei gleichzeitig hoher Empfindlichkeit im gesamten Energiebereich, auch im Bereich der von der Eichquelle emittierten Strahlung, zu erreichen.

Ein weiteres Problem ist, dass zur Eichung für die Messung ionisierender Strahlung regelmäßig eine radioaktive Eichquelle erforderlich ist, die für den Einsatz in der Sicherheitstechnik vorzugsweise Bestandteil des Detektors ist. Dies erfordert einen hohen Aufwand bei der Herstellung entsprechender Detektoren. Aufgrund ständig steigender Sicherheitsanforderungen und dem Wunsch, radioaktives Material soweit als möglich zu vermeiden, besteht somit das Bedürfnis, eine Eichung von Szintillationsdetektoren ohne Verwendung radioaktiver Materialien durchzuführen.

Der vorliegenden Erfindung lag daher die Aufgabe zu Grunde, ein Verfahren zur Kalibrierung eines Szintillationsdetektors sowie einen Szintillationsdetektor selbst zur Verfügung zu stellen, der die beschriebenen Nachteile des bekannten Standes der Technik vermeidet und insbesondere eine Eichung während der laufenden Messung über das gesamte Energiespektrum mit hoher Eichgenauigkeit zu ermöglichen. Der Erfindung lag weiterhin die Aufgabe zu Grunde, eine Eichung eines Szintillationsdetektors zur Messung ionisierender Strahlung zu ermöglichen, die ohne eine (radioaktive) Eichquelle auskommt.

Diese Aufgabe wird erfindungsgemäss mit einem Detektor nach dem kennzeichnenden Teil der unabhängigen Ansprüche gelöst.

Demnach wird ein von der Temperatur abhängiger Kalibrierungsfaktor K direkt aus der Signalform der durch die zu messende Strahlung selbst erzeugten Signale bestimmt. In einer bevorzugten Ausführungsform dieses Verfahrens wird der Kalibrierungsfaktor K in einem vorbekannten Verhältnis zu einem Impulsformparameter P gewählt, wobei der Impulsformparameter P durch Auswertung der Form der registrierten Detektorsignale gewonnen wird, wobei die ausgewerteten Detektorsignale von der Zerfallszeitkonstante $\tau$ des im Szintillationsdetektor erzeugten Szintillationslichts abhängen. Es hat sich dabei als vorteilhaft erwiesen, den Impulsformparameter P aus mindestens einer der folgenden Kenngrössen zu bestimmen: Peaking-Zeit des unipolar geformten Ausgangssignals des Detektors, Anstiegszeit des unipolar geformten Ausgangssignals des Detektors und/oder der Zeit zwischen Signalbeginn und Nulldurchgang des bipolar geformten Ausgangssignals des Detektors.

Es hat sich als günstig erwiesen, den Kalibrierungsfaktor K mit folgenden Verfahrensschritten zu bestimmen: Erzeugen eines Ladungssignals L aus den durch zumindest teilweise Absorption der Strahlung im Detektor erzeugten und mit einer Zerfallszeitkonstante $\tau$ zerfallenden Anregungszuständen, Bestimmung der zur Zerfallszeitkonstante $\tau$ im wesentlichen proportionalen Anstiegszeit des Ladungssignals L und Bestimmung des Kalibrierungsfaktors K aus der Anstiegszeit des Ladungssignals L. Alternativ kann aus dem ursprünglich gewonnene Signal ein Stromsignals S erzeugt werden, so dass Länge und Abklingzeit des Stromsignals S der Zerfallszeitkonstante $\tau$ im wesentlichen proportional sind. Der Kalibrierungsfaktor K wird dann aus der Länge oder den Parametern der Abklingzeit des Stromsignals S bestimmt.

Der Impulsformparameter P kann elektronisch mittels Signalverarbeitung bestimmt werden. Es ist jedoch besonders vorteilhaft, wenn die Signalverarbeitung digital erfolgt, wobei es von Vorteil ist, das elektrische Ladungssignal L und/oder das Stromsignal S digital abzutasten, wobei die Abtastung bevorzugt mit einer Abtastrate zwischen 1 und 1000 MHz, besonders bevorzugt mit einer Abtastrate zwischen 5 und 100 MHz und ganz besonders bevorzugt mit einer Abtastrate von 10 bis 25 MHz, erfolgt. Der Impulsformparameter P kann so besonders vorteilhaft numerisch erzeugt werden.

Sehr günstig ist es darüber hinaus, wenn der Kalibrierungsfaktor K zur Stabilisierung der gemessenen Signale mit Hilfe einer vorbestimmten mathematischen Funktion aus dem Impulsformparameter P bestimmt wird, wobei die vorbestimmte Funktion vorteilhafterweise im wesentlichen linear oder polynomisch ist. Die vorbestimmte Funktion kann dabei im Detektor lesbar abgespeichert sein. Es ist aber auch möglich, den Kalibrierungsfaktor K zur Stabilisierung der gemessenen Signale mit einer vorbestimmten Eichtabelle in Beziehung zu setzen, die den Impulsformparameter P enthält. Es ist vorteilhaft, wenn dies Eichtabelle im Detektor lesbar gespeichert ist. Die Bestimmung des Kalibrierungsfaktors K aus dem Impulsformparameter P erfolgt dann in einer besonders bevorzugten Ausbildung des Verfahrens während der Messung in Echtzeit.

Offenbart ist darüber hinaus ein Detektor zur Messung von Strahlung, bevorzugt ionisierender Strahlung, bei dem die zur Strahlungsenergie im wesentlichen proportionalen Ausgangssignale mit einem oben beschriebenen Verfahren stabilisiert werden.

Gegenstand der Erfindung ist auch ein Detektor zur Messung von Strahlung, bevorzugt ionisierender Strahlung, der zumindest ein die zu messende Strahlung zumindest teilweise absorbierendes Medium aufweist, sowie Mittel zur Umwandlung der vom Medium absorbierten Strahlungsenergie in elektrische Ladung, wobei die elektrische Ladung der Strahlungsenergie zumindest teilweise proportional ist oder zumindest in einem vorbestimmten Verhältnis zur absorbierten Strahlungsenergie steht. Der Detektor weist weiterhin Mittel zur Bestimmung eines zu der Zerfallszeitkonstante $\tau$ des Mediums im wesentlichen in fester Beziehung stehenden Kalibrierungsfaktors K und Mittel zur Stabilisierung der der Strahlungsenergie im wesentlichen proportionalen Ausgangssignale des Detektors mit Hilfe des Kalibrierungsfaktors K auf.

Vorteilhaft ist es, wenn der Detektor folgende Mittel zur Bestimmung des Kalibrierungsfaktors K aufweist: Mittel zur Bestimmung der Anstiegszeit des Ladungssignals L, bevorzugt durch Umwandlung des Ladungssignals L in ein Stromsignal S, bevorzugt durch Differenzierung und Bestimmung der zur Anstiegszeit des Ladungssignals L proportionalen Abklingzeit des Stromsignals S, wobei die Anstiegszeit des Ladungssignals L ein Mass für die Zerfallszeitkonstante $\tau$ der-angeregten Zustände im die Strahlung absorbierenden Medium angibt und Mittel zur Bestimmung des zu der Zerfallszeitkonstante $\tau$ des Mediums im wesentlichen in fester Beziehung stehenden Kahbrierungsfaktors K aus der Anstiegszeit des Ladungssignals L.

Als die Strahlung absorbierendes Medium wird bevorzugt ein Szintillationskristall verwendet, bevorzugt Natriumjodid (NaI), Cadmiumwolframat (CWO), Cäsiumjodid (CsI), Wismutgermanat (BGO) oder, besonders bevorzugt, Lanthanchlorid (LaCl$_3$) oder Lanthanbromid (LaBr$_3$).

Die Mittel zur Umwandlung der vom Medium absorbierten und der Strahlungsenergie zumindest teilweise proportionalen Energie in elektrische Ladung weisen bevorzugt einen Lichtdetektor, etwa einen Fotomultiplier, aufweisend eine Fotokathode mit angekoppeltem Fotoelektronenvervielfacher, oder eine Fotodiode, besonders bevorzugt mit angekoppeltem ladungsempfindlichen Vorverstärker, oder einen Hybrid-Fotomultiplier oder eine Avalanche-Fotodiode auf, wobei die elektrische Ladung in einer Ausführungsform mittels einer Pulsformungs- und Verstärkerschaltung in ein Stromsignal S, umgewandelt wird. Dabei kann eine Zeit t zwischen zwei definierten Punkten des bipolar umgeformten Signals, bevorzugt zwischen dem Punkt der Anstiegsflanke des Signals, an dem es ein Drittel seiner vollen Höhe erreicht hat und dem Punkt, an dem die Signalhöhe 0 Volt beträgt, gemessen werden, wobei die so gemessene Zeit t ein Maß für die Zerfallszeitkonstante $\tau$ ist. Die Zeit des Nulldurchgangs des bipolaren Signals S wird auch als $t_{zc}$ bezeichnet.

In einer anderen Ausführungsform erfolgt die Signalverarbeitung digital, wobei die digitale Signalabtastung bevorzugt mit einer Abtastrate zwischen 1 und 1000 MHz, besonders bevorzugt mit einer Abtastrate zwischen 5 und 100 MHz und ganz besonders bevorzugt mit einer Abtastrate von 10 bis 25 MHz, erfolgt.

Nach einer derartigen Abtastung können im Detektor bevorzugt die Parameter der exponentiell abfallenden Flanke des Stromsignals S, die ein unmittelbares Maß für die Zerfallszeitkonstante $\tau$ sind, durch digitale Signalverarbeitung bestimmt werden. Es hat sich als günstig erwiesen, den zu der Zerfallszeitkonstante $\tau$ proportionalen Parameter mit einer Eichtabelle abzugleichen und die gemessenen Signale mit dem resultierenden Wert zu korrigieren, um so die Messwerte zu kalibrieren und den Detektor damit zu stabilisieren.

Die am elektrischen Ausgang des Detektors, regelmäßig also am Ausgang des Fotomultipliers, messbare Ladung q hängt dabei wie folgt von anderen Größen ab:

$$q = E * w_{scnt}(T) * \varepsilon_{opt} * S_{phK}(\lambda, T) * V_{PMT}(U_A, T, N, Hist)$$

Dabei steht E für die zu messende Energie des Teilchens, $w_{scnt}$ für die Lichtausbeute im Szintillator, $\varepsilon_{opt}$ für die optische Effektivität der Lichtsammlung auf die Fotokathode des Szintillators, $S_{phk}$ für die Sensitivität der direkt am Szintillator angekoppelten Fotokathode und $V_{PMT}$ für die Eigenverstärkung des Fotomultipliers. Es zeigt sich, dass die Lichtausbeute von der Temperatur $T_S$ des Szintillators und die Sensitivität der Fotokathode von der Temperatur $T_F$ der Fotokathode abhängt, wobei die Fotokathode meist mit dem Szintillator thermisch unmittelbar verbunden ist, so dass nur die gemeinsame Temperatur $T = T_F = T_S$ zu betrachten ist, wobei die Sensitivität der Fotokathode zusätzlich noch eine Funktion der Wellenlänge $\lambda$ ist.

Die Eigenverstärkung des Fotomultipliers $V_{PMT}$ hängt von der Betriebsspannung $U_A$, der Temperatur $T$, der Zählrate $N$ und nichtlinearen Effekten aus der Vorgeschichte $Hist$ des Detektors ab. Diese Abhängigkeiten werden im Folgenden nicht weiter untersucht.

Es ist aus J.S. Schweitzer und W. Ziehl, IEEE Trans. Nucl. Sci. NS-30(1), 380 (1983), bekannt, dass die Zerfallszeitkonstante $\tau$ der angeregten Zustände von der Kristalltemperatur abhängt. Die vorliegende Erfindung nutzt nunmehr erstmals diesen Effekt, in dem sie zur Zerfallszeitkonstante $\tau$ in einer festen Beziehung stehende Größen identifiziert. Mit dem vorliegenden Verfahren werden aus diesen Größen die Kristalltemperatur T und/oder Kalibrierungsfaktoren K während der laufenden Messung bestimmt, mit deren Hilfe der Detektor stabilisiert werden kann.

Das Besondere hieran ist, dass diese Stabilisierung nicht nur online während der laufenden Messung erfolgen kann, sondern dass die Kalibrierungsfaktoren K aus der Form der zu messenden Signale selbst abgeleitet werden, so dass keine radioaktive Eichquelle zur Stabilisierung notwendig ist.

Das Verfahren ist damit schon wegen der fortlaufenden Stabilisierungsmöglichkeit prinzipiell genauer als die bekannten Verfahren mit Eichquelle. Gleichzeitig ist keine Eichquelle notwendig, so dass die Verwendung radioaktiven Materials unterbleiben und zusätzlich auch die volle Auflösung in dem Energiebereich der zu messenden Strahlung zur Verfügung steht, in dem sonst die Signale der Eichquelle auftreten und die Messung geringer Dosen erschweren.

Im Folgenden wird ein Ausführungsbeispiel anhand der Figuren 1 bis 5 erläutert. Es zeigen

Figur 1: schematischer Aufbau eines Szintillationsdetektors mit Fotomultiplier

Figur 2a: Lichtemission über der Zeit, dargestellt für zwei Ereignisse mit unterschiedlichen Zerfallszeitkonstanten aber gleicher Lichtmenge (Energie)

Figur 2b: Ladungssignal L(t) für die beiden Ereignisse aus Figur 2a

Figur 2c: Stromsignal S(t) für die beiden Ereignisse aus Figur 2a

Figur 2d: Bipolares Signal B(t) für die beiden Ereignisse aus Figur 2a

Figur 2e: Unipolares Signal U(t) für die beiden Ereignisse aus Figur 2a

Figur 2f: Ladungssignal L(t) mit und ohne RC-Entladung für ein Folge von Ereignissen

Figur 3: Energiespektren einer $^{137}$Cs-Quelle, aufgenommen bei verschiedenen Temperaturen

Figur 4: Nulldurchgangszeitspektren, die gleichzeitig mit den Energiespektren nach Figur 3 aufgenommen wurden

Figur 5a: Mittlere Nulldurchgangszeit $<t_{zc}>$ als Funktion der Temperatur des Detektorsystems

Figur 5b: Lage des 662 -keV-Peaks im Energiespektrum nach Abb. 3 als Funktion der Temperatur des Detektorsystems

Figur 5c: Lage des 662-keV-Peaks im Energiespektrum als Funktion der mittleren Nulldurchgangszeit $<t_{ZC}>$

Figur 5d: Korrekturfaktor K als Funktion der mittleren Nulldurchgangszeit $<t_{ZC}>$

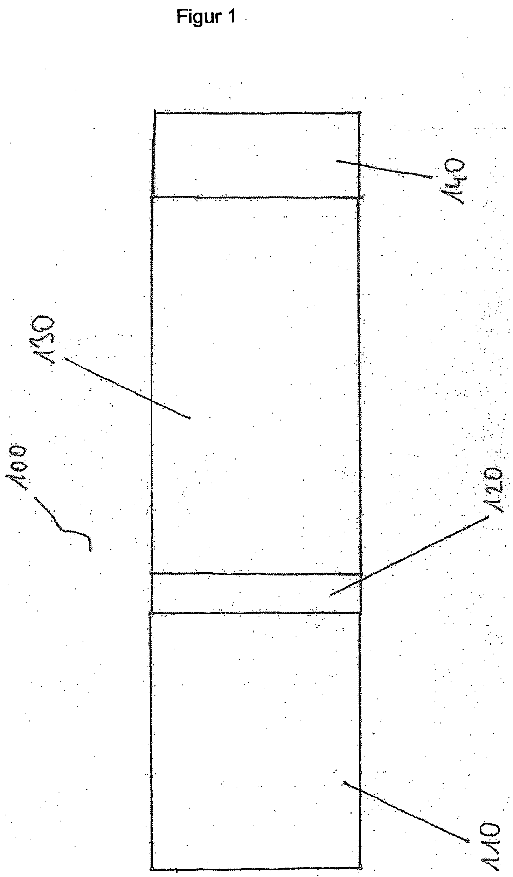

Figur 1 zeigt exemplarisch den schematischen Aufbau eines Szintillationsdetektors 100. Gezeigt sind der Szintillationskristall 110, die Fotokathode 120 und der Fotomultiplier 130. Die Strahlung wird vom Szintillationskristall zumindest teilweise absorbiert und erzeugt dort angeregte Zustände, die unter Emission von Photonen zerfallen. Diese treffen auf eine Fotokathode 120, die in Abhängigkeit von der eingestrahlten Lichtmenge Elektronen emittiert, die wiederum in einem Fotomultiplier 130 vervielfältigt werden. Das Ausgangssignal des Fotomultipliers 130 wird dann weiter verarbeitet um letztlich ein der absorbierten Energie der Strahlung entsprechendes Ausgangssignal des Detektors zu erhalten, welches in der Auswerteelektronik 140 weiter verarbeitet wird.

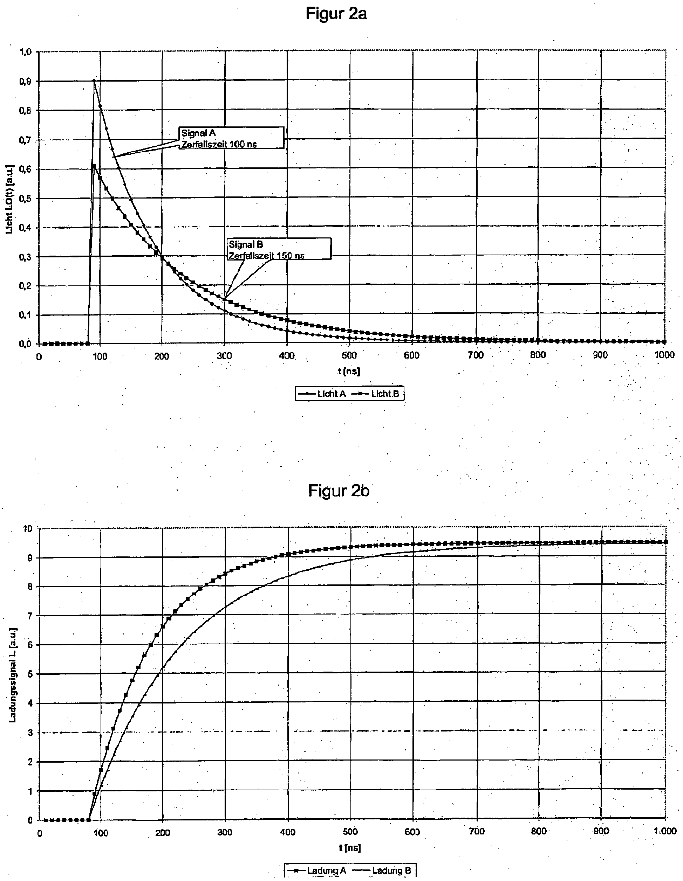

Die Lichtemission erfolgt mit dem Zerfall der angeregten Zustände und damit im Wesentlichen exponentiell mit einer Zerfallszeitkonstanten $\tau$. Die Figuren 2a bis 2e zeigen die rechnerisch simulierte Lichtemission für zwei Ereignisse mit unterschiedlichen Zerfallszeitkonstanten ($\tau_A$ = 100 ns, $\tau_B$ = 150 ns) und die nachfolgende Signalverarbeitung.

Der Zeitverlauf der Lichtemission ist in Figur 2a dargestellt. Die insgesamt bis zum Zeitpunkt t gesammelte Ladung q wird im Ladungssignal L(t) widerspiegelt (Figur 2b). Die Höhe des Ladungssignals L(t) nach dem Abklingen der Lichtimpulse (in Figur 2b: etwa nach 1000 ns) ist ein Maß für die Zahl der insgesamt emittierten Photonen und damit für die zu messende Energie E, die Steilheit der Anstiegsflanke des Ladungssignals L reflektiert die Zerfallszeitkonstante des Szintillatormaterials.

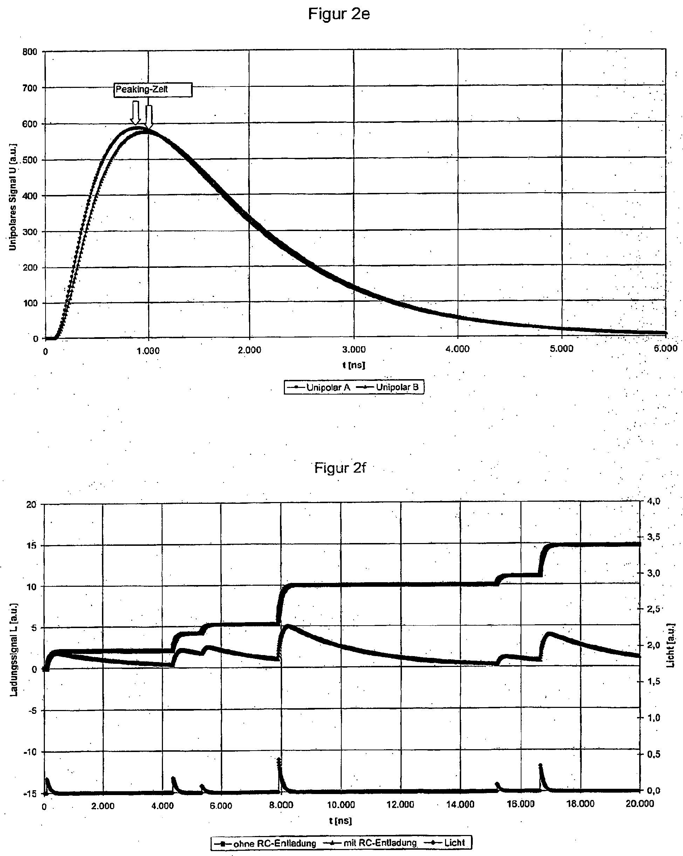

Wie aus Figur 2f ersichtlich, würden mehrere aufeinander folgende Signale dazu führen, dass das Ladungssignal ständig ansteigt (Kurve "ohne RC-Entladung"). Aus technischen Gründen wird das Ladungssignal deshalb in der Regel über ein RC-Glied mit einer elektronischen Zeitkonstanten $\Theta$, die groß gegenüber $\tau$ ist, zurückgeführt (Kurve "mit RC-Entladung"). Diese Rückführung ist aber für die nachfolgende Diskussion prinzipiell ohne Belang, so dass in Figur 2b aus Gründen der Anschaulichkeit auf dieses Detail verzichtet wurde.

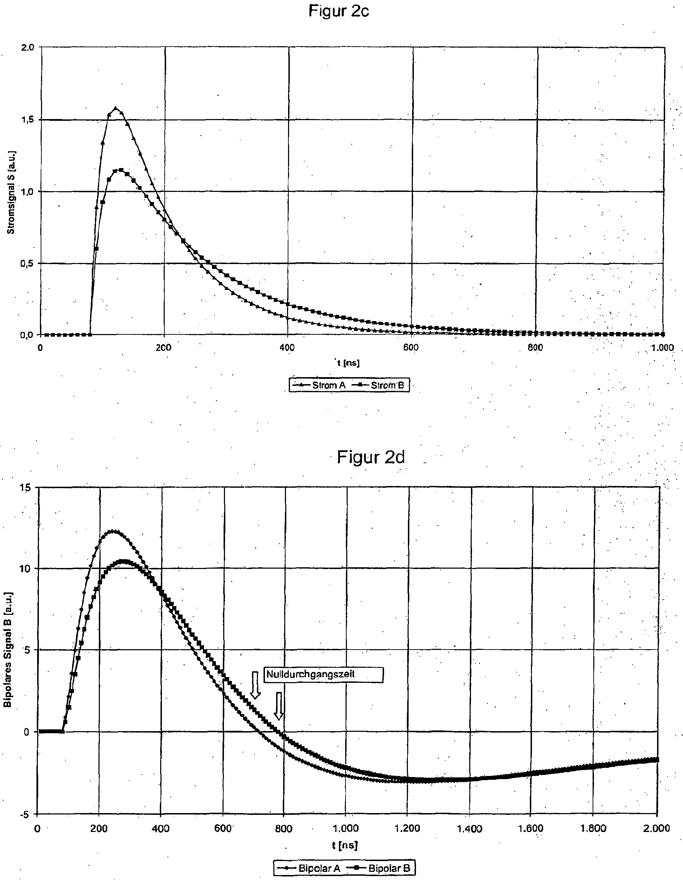

Den Zeitverlauf der Lichtemission kann man elektronisch näherungsweise rekonstruieren, indem man das Ladungssignal L(t) differenziert, vorzugsweise elektronisch mit herkömmlichen Pulsformungs- und Verstärkerschaltungen, und damit ein Stromsignal S(t) erhält (Figur 2c). Die Information über die Zerfallszeitkonstante $\tau$ ist aus Form oder Länge des Stromsignals S(t) extrahierbar.

Durch aufeinander folgende Integrations- und Differenziationsschritte, vorzugsweise elektronisch mit herkömmlichen Pulsformungs- und Verstärkerschaltungen zu realisieren, kann das ursprüngliche Ladungs- oder Stromsignal weiter in ein bipolares Signal B(t) (Figur 2d) oder in ein unipolares Signal U(t) (Figur 2e) geformt werden.

Aus Figur 2d wird deutlich, dass der Zeitpunkt des Nulldurchgangs im bipolaren Signal B(t) von der Zerfallszeitkonstanten $\tau$ abhängt. Die Nulldurchgangszeit kann sehr genau mit einem Nulldurchgangsdetektor gemessen werden. Sie ist unabhängig von der Signalamplitude und damit unabhängig von der Energie des nachgewiesenen Teilchens sowie von Verschiebungen der Signalverstärkung.

Figur 2e demonstriert, dass die Zerfallszeitkonstante $\tau$ sowohl die Anstiegs- als auch die Peaking-Zeit des unipolaren Signals U(t) (der Zeitpunkt, an dem das Signalmaximum erreicht wird) durch die Zerfallszeitkonstante $\tau$ bestimmt werden. Auch diese Parameter können mit elektronischen Schaltungen nach dem Stand der Technik gemessen werden.

Alle oben beschriebenen Methoden können genutzt werden, um die Zerfallszeitkonstante $\tau$ oder aber die damit korrelierte Temperatur des Szintillationskristalls oder aber einen von der Temperatur abhängigen Korrekturfaktor K, der zur Stabilisierung des Detektors genutzt wird, aus der Form des Detektorsignals zu ermitteln. Das nachfolgend beschriebene Ausführungsbeispiel demonstriert das Prinzip an einem konkreten Fall:

Ein Szintillationsdetektor, bestehend aus einem NaI(T1)-Kristall mit angekoppeltem Fotomultiplier, wird radioaktiver Strahlung ausgesetzt. Die Signale des Fotomultipliers werden entsprechend Figur 2d bipolar geformt und danach mit einer Abtastrate von $f_{sampl}$ = 25 MHz digital abgetastet. Die Nulldurchgangszeit $t_{ZC}$ wird für jedes detektierte Signal bestimmt, indem man

- den Zeitpunkt $t_1$, an dem die Signalfront den dritten Teil des Signalmaximums erreicht,
- den Zeitpunkt $t_2$, an dem das Signal die Nulllinie schneidet, und schließlich
- die Differenz $t_{zc} = t_2 - t_1$ numerisch aus den einzelnen Abtastpunkten berechnet.

Durch geeignete numerische Verfahren, im dargestellten Fall durch lineare Interpolation zwischen den einzelnen Abtastpunkten, lässt sich die Nulldurchgangszeit $t_{zc}$ mit einer Unsicherheit $\Delta t$ bestimmen, die wesentlich geringer ist als das Abtastintervall ($\Delta t \ll 1/f_{sampl}$).

Das Maximum des bipolaren Signals wird als Maß für die Energie E genutzt.

Während der Messung wird neben dem Energiespektrum, erzeugt durch Impulshöhenanalyse des Parameters E, auch ein Nulldurchgangszeitspektrum, erzeugt durch Impulshöhenanalyse des Parameters $t_{zc}$, aufgenommen.

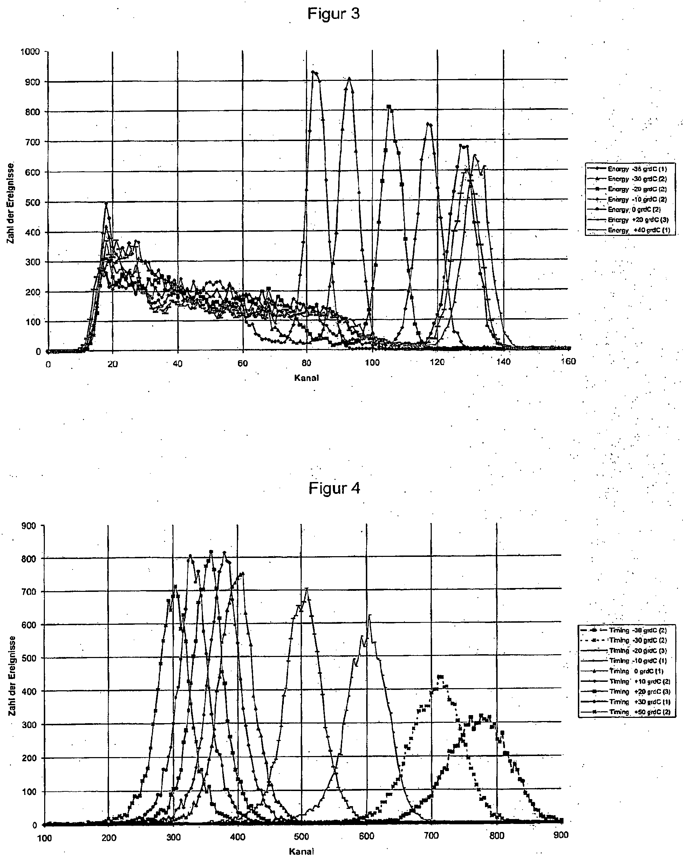

Figur 3 zeigt Energiespektren, die mit dem Detektor während der Bestrahlung mit einer $^{137}$Cs-Quelle bei unterschiedlichen Temperaturen aufgenommen wurden. Figur 4 zeigt die gleichzeitig mit diesem System aufgenommenen Nulldurchgangszeitspektren.

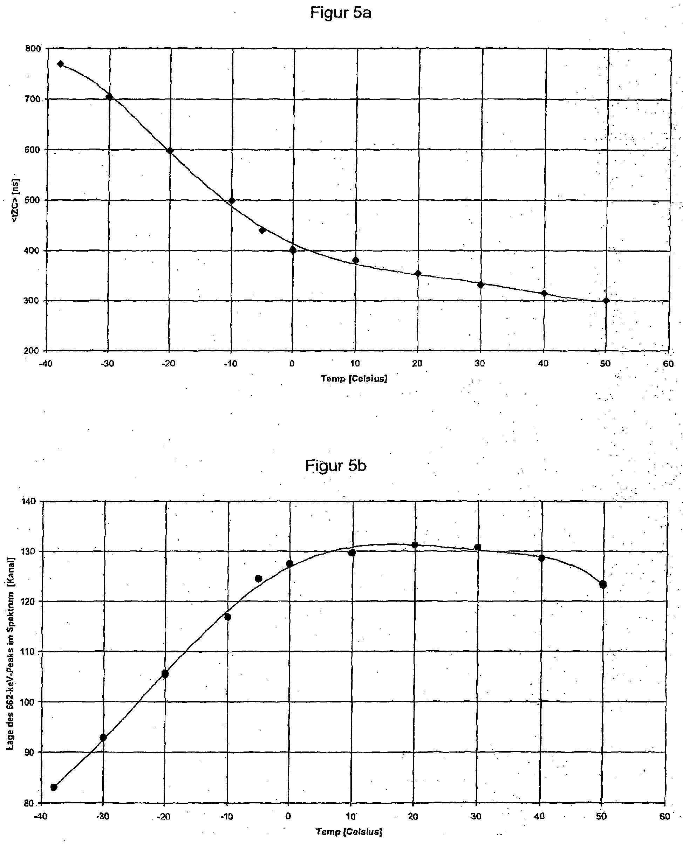

In **Figur 5a** ist die mittlere Nulldurchgangszeit $\langle t_{ZC} \rangle$, bestimmt durch Berechnung des Schwerpunkts der einzelnen Nulldurchgangszeitspektren, als Funktion der zugehörigen Temperatur des Detektorsystems dargestellt. $\langle t_{ZC} \rangle$ ist eindeutig mit der Temperatur des Detektorsystems korreliert. Wie erwartet und bereits bekannt, hängt auch die Lage des 662-keV-Peaks im Energiespektrum von der Temperatur ab (Figur 5b). Dieser Effekt muss nun durch den Korrekturfaktor K kompensiert werden. Hierzu kann man zunächst die Lage des 662-keV-Peaks als Funktion des Parameters

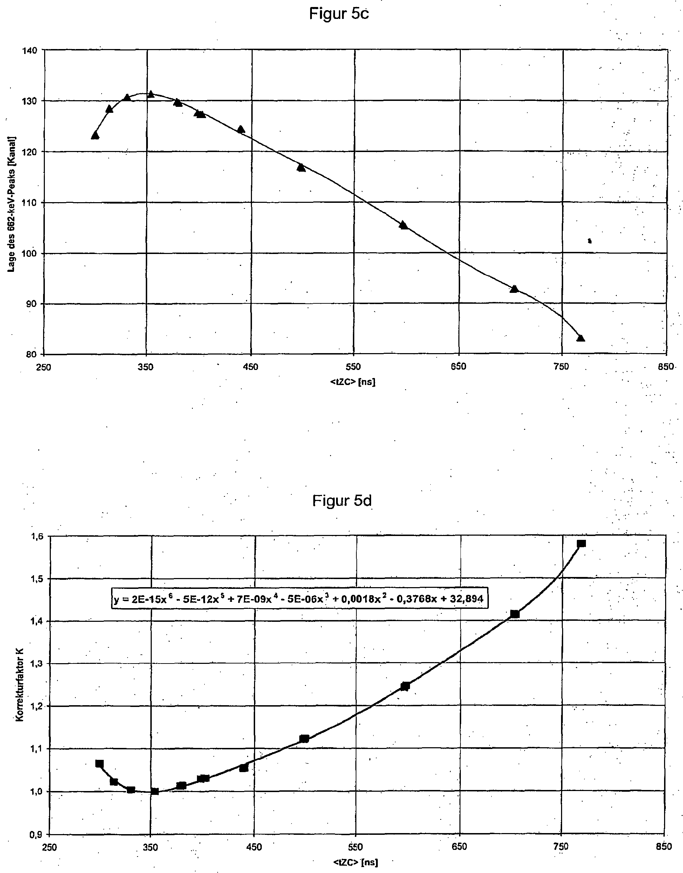

$\langle t_{ZC} \rangle$ darstellen. Figur 5c zeigt, dass diese Funktion so beschaffen ist, dass man die Lage $X_{662}$ des 662-keV-Peaks aus <tZC> eindeutig vorhersagen kann.

Mit Hilfe des Korrekturfaktors

$$K(\langle t_{ZC} \rangle) = X_{662}(350 \text{ ns}) / X_{662}(\langle t_{ZC} \rangle)$$

kann man die aktuelle Peaklage so korrigieren, dass

$$K(\langle t_{ZC} \rangle) * X_{662}(\langle t_{ZC} \rangle) = X_{662}(350 \text{ ns}) = const.$$

gilt - die korrigierte Peaklage ist also unabhängig von $\langle t_{ZC} \rangle$ und damit unabhängig von der Temperatur des Detektorsystems. Für das konkrete Detektorsystem ergibt sich ein Korrekturfaktor K, der in **Figur 5d** dargestellt ist. Diese Funktion ist für jeden Detektor individuell zu bestimmen.

Der Kalibrierungsfaktor K, der während der Messung aus der Signalform der gemessenen Signale selbst bestimmt werden kann und der weitgehend unabhängig von der Energie E der gemessenen Strahlung ist, kann etwa in einer Tabelle im Detektor abgelegt sein, so dass die Stabilisierung aus den bereits in der Tabelle hinterlegten Daten erfolgen kann. Es ist ebenso möglich, wie oben exemplarisch gezeigt, die Abhängigkeit funktional zu erfassen, die Funktion im Detektor zu speichern und die Stabilisierung durch Anwendung der Funktion durchzuführen.

In einer weiteren Ausführungsform kann die Anstiegszeit $t_r$ des Signals nach Figur 2c als Impulsformparameter P gewählt werden. Geeignet für das erfindungsgemässe Verfahren sind jedoch auch alle anderen Parameter, die eine bestimmbare Abhängigkeit von der Zerfallszeit $\tau$ aufweisen.

Besonders vielfältige Möglichkeiten ergeben sich dann, wenn die Signalverarbeitung nicht analog, sondern digital erfolgt. Hierfür wird in einer Ausführungsform der Erfindung das Ausgangssignal des Fotomultipliers oder des ladungsempfindlichen Vorverstärkers digital mit einer Abtastrate von 25 MHz abgetastet Messungen belegen, dass diese Abtastrate bereits genügt, um ausreichend genaue Ergebnisse zu erzielen.

Die digitalen Signale sind technisch einfacher und billiger auszuwerten als die vergleichbaren analogen Signale. So kann etwa auf die Umwandlung in ein bipolares Signal, dessen Nulldurchgangszeit $t_{zc}$ analog leicht bestimmbar ist, verzichtet werden, da ein ebenso gut geeigneter Impulsformparameter auch direkt aus dem digitalisierten Ausgangssignal des Fotomultipliers gewonnen werden kann. Darüber hinaus ist es für die Weiterverarbeitung der gemessenen Signale und Auswertung, etwa mit einem Vielkanalanalysator VKA, günstig, wenn die Messsignale bereits digital vorliegen.

Das Ausführungsbeispiel, insbesondere die Figur 5a zeigt, dass die Abhängigkeit des Impulsformparameters $t_{zc}$ von der Temperatur des Kristalls vor allem über den interessierenden Temperaturbereich von -15°C bis + 55°C ausreichend eindeutig ist.

Das erfindungsgemässe Verfahren kann aber nicht nur für Detektoren eingesetzt werden. Da der Impulsformparameter P immer auch ein Mass für die Kristalltemperatur T ist, kann nach diesem Verfahren auch ein Thermometer betrieben werden. Als Strahlungsquelle genügt in aller Regel die ohnehin vorhandene Untergrundstrahlung. Da die Messung nicht von der Strahlungsenergie abhängt, ist eine Stabilisierung der gemessenen Energie nicht erforderlich.

Der Vorteil eines derartigen Thermometers ist, dass es am Ort der Messung keiner über die ohnehin vorhandene Untergrundstrahlung hinausgehenden Energiezufuhr zum Betrieb des Thermometers bedarf, die Temperatur des zu messenden Objekts also nicht durch die Messung selbst beeinflusst wird.

Derartige Temperaturmessungen können im Detektor selbst zur Kalibrierung auch anderer Komponenten verwendet werden, sie können aber auch ausserhalb des Detektors eingesetzt werden.

**Patentansprüche**

1. Verfahren zur Stabilisierung der von einem Szintillationsdetektor zur Messung von Strahlung, bevorzugt ionisierender Strahlung, durch die im Detektor zumindest teilweise absorbierte Strahlung erzeugten und von der Betriebstemperatur des Deteldors abhängigen Signale,
   wobei der Temperatur abhängige Kalibrierungsfaktor (K) aus der Signalform der durch die zu messende Strahlung selbst erzeugten Signale bestimmt wird,
   wobei der Kalibrierungsfaktor (K) in einem vorbestimmten Verhältnis zu einem Impulsformparameter (P) gewählt wird,
   wobei der Impulsformparameter (P) durch Auswertung der Form der registrierten Detektorsignale gewonnen wird,

wobei die ausgewerteten Detektorsignale von der Zerfallszeitkonstante (τ) des im Szintillationsdetektor erzeugten Szintillationslichts abhängen und

**dadurch gekennzeichnet dass** der Impulsformparameter (P) aus mindestens einer der folgenden Kenngrössen bestimmt wird:

- Länge des unipolar geformten Ausgangssignals des Detektors;
- Anstiegszeit des unipolar geformten Ausgangssignals des Detektors;
- Zeit zwischen Signalbeginn und Nulldurchgang des bipolar geformten Ausgangssignals des Detektors.

2. Verfahren nach Anspruch 1, wobei der Kalibrierungsfaktor (K) mit folgenden Verfahrensschritten bestimmt wird:

- Erzeugen eines Ladungssignals (L) aus den durch zumindest teilweise Absorption der Strahlung im Detektor erzeugten und mit einer Zerfallszeit (τ) zerfallenden Anregungszuständen,
- Bestimmung der zur Zerfallszeit (τ) im wesentlichen proportionalen Anstiegszeit des Ladungssignals (L),
- Bestimmung des Kalibrierungsfaktors (K) aus der Anstiegszeit des Ladungssignals (L).

3. Verfahren nach Anspruch 1 oder 2, wobei der Kalibnerungsfaktor (K) mit folgenden Verfahrensschritten bestimmt wird:

- Erzeugen eines Stromsignals (S), so dass Länge und Abklingzeit des Stromsignals (S) der Zerfallszeit (τ) im wesentlichen proportional sind,
- Bestimmen des Kalibrierungsfaktors (K) aus der Länge oder den Parametern der Abklingzeit des Stromsimals (S).

4. Verfahren nach einem der vorhergehenden Ansprüche, wobei der Impulsformparameter (P) elektronisch mittels Signalverarbeitung erzeugt wird.

5. Verfahren nach einem der vorhergehenden Ansprüche, wobei das elektrische Ladungssignal (L) und/oder das Stromsignal (S) digital abgetastet wird, wobei die Abtastung bevorzugt mit einer Abtastrate zwischen 1 und 1000 MHz, besonders bevorzugt mit einer Abtastrate zwischen 5 und 100 MHz und ganz besonders bevorzugt mit einer Abtastrate zwischen 10 bis 25 MHz, erfolgt, und die weitere Signalverarbeitung digital erfolgt.

6. Verfahren nach dem vorhergehenden Anspruch, wobei der Impulsformparameter (P) numerisch erzeugt wird.

7. Verfahren nach einem der vorhergehenden Ansprüche, wobei der Kalibrienmgsfaktor (K) zur Stabilisierung der gemessenen Signale mit Hilfe einer vorbestimmten mathematischen Funktion aus dem Impulsformparameter (P) bestimmt wird.

8. Verfahren nach dem vorhergehenden Anspruch, wobei die vorbestimmte Funktion im wesentlichen linear ist.

9. Verfahren nach Anspruch 7, wobei die vorbestimmte Funktion im wesentlichen polynomisch ist.

10. Verfahren nach einem der Ansprüche 7 bis 9, wobei die vorbestimmte Funktion im Detektor lesbar abgespeichert ist.

11. Verfahren nach einem der vorhergehenden Ansprüche, wobei der Kalibrierungsfaktor (K) zur Stabilisierung der gemessenen Signale mit einer vorbestimmten Eichtabelle in Beziehung gesetzt wird, die den Impulsformparameter (P) enthält.

12. Verfahren nach dem vorhergehenden Anspruch, wobei die Eichtabelle vorbestimmt und im Detektor lesbar abgespeichert ist.

13. Verfahren nach einem der vorhergehenden Ansprüche, wobei die Bestimmung des Kalibrierungsfaktors (K) aus dem Impulsformparameter (P) während der Messung in Echtzeit erfolgt.

14. Szintillationsdetektor zur Messung von Strahlung, bevorzugt ionisierender Strahlung, aufweisend

- ein die zu messende Strahlung zumindest teilweise absorbierendes Medium,
- Mittel zur Umwandlung der vom Medium absorbierten Strahlungsenergie in elektrische Ladung, wobei die elektrische Ladung der Strahlungsenergie zumindest teilweise proportional ist,

• Mittel zur Bestimmung eines zu der Zerfallszeit ($\tau$) des Mediums im wesentlichen in fester Beziehung stehenden von der Temperatur abhängigen Kalibrierungsfaktors (K)

• Mittel zur Stabilisierung der der Strahlungsenergie im wesentlichen proportionalen Ausgangssignale des Detektors mit Hilfe des Kalibrierungsfaktors (K),

**dadurch gekennzeichnet dass**

• die Mittel zur Bestimmung des Kalibrierungsfaktors (K) umfassen:

Mittel zur Gewinnung eines Impulsformparameters (P) durch Auswertung der Form der registrierten Detektorsignale, wobei der Kalibrierungsfaktor (K) in einem vorbestimmten Verhältnis zu dem Impulsformparameter gewählt wird, umfassend Mittel zur Bestimmung einer der folgenden Kemgrössen woraus der Impulsformparameter (P) bestimmt wird:

die Länge des unipolar geformten Ausgangssignals des Detektors;

die Anstiegszeit des unipolar geformten Ausgangssignals des Detektors;

die Zeit zwischen Signalbeginn und Nulldurchgang des bipolar geformten Ausgangssignals des Detektors.

15. Szintillationsdetektor nach dem vorherigen Anspruch, wobei das die zu messende Strahlung absorbierende Medium einen Szintillationskristall aufwtist bevorzugt Natriumjodid (NaJ), Cadmiumwolframat (CWO), Cäsiumjodid (CsJ), Wismutgermanat (BGO), Lanthanchlorid (LaCl$_3$) oder Lanthanbromid (LaBr$_3$).

16. Szintillationsdetektor nach dem vorherigen Anspruch, wobei die Mittel zur Umwandlung der vom Medium absorbierten und der Strahlungsenergie zumindest teilweise proportionalen Energie in elektrische Ladung einen Lichtdetektor, etwa einen Fotomultiplier, aufweisend eine Fotokathode mit angekop-peltem Fotoelektronenvervielfacher, oder eine Fotodiode, besonders bevorzugt mit angekoppeltem ladungsempfindlichen Vorverstärker, oder einen Hybrid-Fotomultiplier oder eine Avalanche-Fotodiode, aufweisen.

17. Szintillationsdetektor nach einem der vorherigen Ansprüche 14 bis 16, wobei die elektrische Ladung mittels einer Pulsformungs- und Verstärkerschaltung in ein Stromsignal (S) umgewandelt wird.

18. Szintillationsdetektor nach dem vorherigen Anspruch, wobei eine Zeit (t) zwischen zwei definierten Punkten des bipolar umgeformten Signals, bevorzugt zwischen dem Punkt der Anstiegsflanke des Signals, an dem es ein Drittel seiner vollen Höhe erreicht hat und dem Punkt, an dem die Signalhöhe 0 Volt beträgt, gemessen wird, wobei die so gemessene Zeit (t) ein Maß für die Zerfallszeit ($\tau$) ist.

19. Szintillationsdetektor nach einem der vorherigen Ansprüche 14 bis 18, das elektrische Signal digital abgetastet wird, wobei die Abtastung bevorzugt mit einer Abtastrate zwischen 1 und 1000 MHz, besonders bevorzugt mit einer Abtastrate zwischen 5 und 100 MHz und ganz besonders bevorzugt mit einer Abtastrate zwischen 10 und 25 MHz, erfolgt, und die weitere Signalverarbeitung digital erfolgt

20. Szintillationsdetektor nach dem vorhergehenden Anspruch, bei dem die Parameter der exponentiell abfallenden Flanke des Stromsignals (S), die ein unmittelbares Maß für die Zerfallszeit ($\tau$) sind, durch digitale Signalverarbeitung bestimmt werden.

21. Szintillationsdetektor nach einem der vorhergehenden Ansprüche 14 bis 20, in dem der zu der Zerfallszeit ($\tau$) proportionale Parameter mit einer Eichtabelle abgeglichen wird und der die gemessenen Signale mit dem resultierenden Wert korrigiert um die Messwerte zu kalibrieren.

**Claims**

1. A method for stabilizing the signals generated by a scintillation detector for measuring radiation, preferably ionizing radiation, with these signals being generated by the radiation that is at least partially absorbed in the detector and said signals being dependent on the operating temperature of the detector,
wherein the temperature-dependent calibration factor (K) is determined from the signal shape of the signals generated by the radiation to be measured itself,
wherein the calibration factor (K) is chosen in a predefined proportion to a pulse shape parameter (P),

wherein the pulse shape parameter (P) is obtained by evaluating the shape of the registered detector signals, and wherein the evaluated detector signals are dependent on the decay time constant ($\tau$) of the scintillation light generated in the scintillation detector,

**characterized in that** the pulse shape parameter (P) is determined from at least one of the following parameters:

- the length of the unipolar-shaped output signal of the detector;
- the rise time of the unipolar-shaped output signal of the detector;
- the time between signal beginning and zero crossing of the bipolar-shaped output signal of the detector.

2. The method according to claim 1, wherein the calibration factor (K) is determined with the following steps:

- generating a charge signal (L) from the excited states that are generated due to the at least partial absorption of the radiation in the detector and decay with a decay time ($\tau$),
- determining the rise time of the charge signal (L), which is essentially proportional to the decay time ($\tau$), and
- determining the calibration factor (K) from the rise time of the charge signal (L).

3. The method according to claim 1 or 2, wherein the calibration factor (K) is determined with the following steps:

- generating a current signal (S) such that the length and the fall time of the current signal (S) are essentially proportional to the decay time ($\tau$), and
- determining the calibration factor (K) from the length or the parameters of the decay time of the current signal (S).

4. The method according to one of the preceding claims, wherein the pulse shape parameter (P) is generated electronically by means of signal processing.

5. The method according to one of the preceding claims, wherein the electric charge signal (L) and/or the current signal (S) is digitally sampled, wherein the sampling preferably takes place with a sampling rate between 1 and 1000 MHz, especially with a sampling rate between 5 and 100 MHz, particularly with a sampling rate between 10 and 25 MHz, and wherein the further signal processing takes place digitally.

6. The method according to one of the preceding claims, wherein the pulse shape parameter (P) is generated numerically.

7. The method according to one of the preceding claims, wherein the calibration factor (K) for stabilizing the measured signal is determined from the pulse shape parameter (P) with the aid of a predefined mathematical function.

8. The method according to the preceding claim, wherein the predefined function is essentially linear.

9. The method according to claim 7, wherein the predefined function is essentially polynomial.

10. The method according to one of claims 7-9, wherein the predefined function is stored in the detector in readable form.

11. The method according to one of the preceding claims, wherein the calibration factor (K) for stabilizing the measured signals is interrelated to a predefined calibration table that contains the pulse shape parameter (P).

12. The method according to one of the preceding claims, wherein the calibration table is predefined and stored in the detector in readable form.

13. The method according to one of the preceding claims, wherein the determination of the calibration factor (K) from the pulse shape parameter (P) takes place in real time during the measurement.

14. A scintillation detector for measuring radiation, preferably ionizing radiation, featuring

- a medium that at least partially absorbs the radiation to be measured,
- means for converting the radiation energy absorbed by the medium into an electric charge, wherein the electric charge is at least partially proportional to the radiation energy,
- means for determining a temperature-dependent calibration factor (K), which essentially has a fixed relation to the decay time ($\tau$) of the medium, and

• means for stabilizing the output signals of the detector, which are essentially proportional to the radiation energy, with the aid of the calibration factor (K),
**characterized in that**
• the means for determining the calibration factor (K) comprise:

means for obtaining a pulse shape parameter (P) by evaluating the shape of the registered detector signals, wherein the calibration factor (K) is chosen in a predefined proportion to a pulse shape parameter, comprising means for determining one of the following parameters, from which the pulse shape parameter (P) is determined:

the length of the unipolar-shaped output signal of the detector;
the rise time of the unipolar-shaped output signal of the detector;
the time between signal beginning and zero crossing of the bipolar-shaped output signal of the detector.

15. The scintillation detector according to the preceding claim, wherein the medium that absorbs the radiation to be measured features a scintillation crystal, preferably sodium iodide (NaI), cadmium tungstate (CWO), cesium iodide (CsI), bismuth germanate (BGO), lanthanum chloride (LaCl$_3$) or lanthanum bromide (LaBr$_3$).

16. The scintillation detector according to the preceding claim, wherein the means for converting the energy absorbed by the medium, which is at least partially proportional to the radiation energy, into an electric charge comprise a photodetector such as a photomultiplier featuring a photocathode with a photoelectron multiplier coupled thereto or a photodiode, particularly with a charge-sensitive preamplifier coupled thereto, or a hybrid photomultiplier or an avalanche photodiode.

17. The scintillation detector according to one of preceding claims 14-16, wherein the electric charge is converted into a current signal (S) by means of a pulse shaping and amplifying circuit.

18. The scintillation detector according to the preceding claim, wherein a time (t) between two defined points of the bipolar-transformed signal is measured, preferably a time between the point, at which the leading edge of the signal has reached one-third of its full height, and the point, at which the signal intensity amounts to 0 volt, and wherein the thusly measured time (t) is a measure for the decay time ($\tau$).

19. The scintillation detector according to one of preceding claims 14-18, wherein the electric signal is digitally sampled, wherein the sampling preferably takes place with a sampling rate between 1 and 1000 MHz, especially with a sampling rate between 5 and 100 MHz, particularly with a sampling rate between 10 and 25 MHz, and wherein the further signal processing takes place digitally.

20. The scintillation detector according to the preceding claim, wherein the parameters of the exponentially negative-going edge of the current signal (S), which are a direct measure for the decay time ($\tau$), are determined by means of digital signal processing.

21. The scintillation detector according to one of preceding claims 14-20, wherein the parameter that is proportional to the decay time ($\tau$) is matched with a calibration table and corrects the measured signals with the resulting value in order to calibrate the measuring values.

**Revendications**

1. Procédé de stabilisation d'un détecteur de scintillation pour la mesure d'un rayonnement, de préférence un rayonnement ionisant, au moyen duquel il se produit une absorption partielle du rayonnement dans le détecteur et des signaux dépendants de la température de fonctionnement de détecteur,
dans lequel un facteur d'étalonnage (K) dépendant de la température est déterminé à partir de la forme des signaux, ce facteur étant généré par le rayonnement à mesurer lui-même,
dans lequel le facteur d'étalonnage (K) est choisi selon un rapport prédéterminé avec un paramètre de forme d'impulsions (P),
dans lequel le paramètre de forme d'impulsions (P) est obtenu par une évaluation de la forme des signaux de détecteur enregistrés,
dans lequel les signaux de détecteur évalués dépendent de la constante de temps de diminution d'intensité ($\tau$) de

la lumière de scintillation générée dans le détecteur de scintillation, et

**caractérisé en ce que** le paramètre de forme d'impulsions (P) est déterminé à partir d'au moins l'une des valeurs caractéristiques suivantes :

- la longueur du signal de sortie de forme unipolaire du détecteur ;
- le temps de montée du signal de sortie de forme unipolaire du détecteur ;
- le temps entre le début du signal et le passage par zéro du signal de sortie de forme bipolaire du détecteur.

2. Procédé selon la revendication 1, dans lequel le facteur d'étalonnage (K) est déterminé au moyen des étapes de procédé suivantes :

- générer un signal de charge (L) généré par l'absorption au moins partielle du rayonnement dans le détecteur et avec un temps de diminution d'intensité ($\tau$) qui fait décroître l'état de stimulation,
- détermination du temps de montée du signal de charge (L), qui est sensiblement proportionnel au temps de diminution d'intensité ($\tau$);
- détermination du facteur d'étalonnage (K) à partir du temps de montée du signal de charge (L).

3. Procédé selon la revendication 1 ou la revendication 2, dans lequel le facteur d'étalonnage (K) est déterminée au moyen des étapes de procédé suivantes :

- générer un signal de courant (S) tel que la longueur et le temps de diminution d'intensité du signal de courant (S) sont sensiblement proportionnels au temps de diminution d'intensité ($\tau$),
- déterminer le facteur d'étalonnage (K) à partir de la longueur ou des paramètres du temps de diminution d'intensité du signal de courant (S).

4. Procédé selon l'une quelconque des revendications précédentes, dans lequel le paramètre de forme d'impulsion (P) est généré par voie électronique au moyen d'un traitement de signal.

5. Procédé selon l'une quelconque des revendications précédentes, dans lequel le signal de charge électrique (L) et / ou le signal de courant (S) est/sont échantillonné(s) numériquement, l'échantillonnage étant de préférence effectué à une fréquence d'échantillonnage comprise entre 1 et 1 000 MHz, de préférence à une fréquence d'échantillonnage comprise entre 5 et 100 MHz, et, de plus grande préférence, à une fréquence d'échantillonnage comprise entre 10 et 25 MHz, le traitement ultérieur du signal ayant lieu de manière numérique.

6. Procédé selon la revendication précédente, dans lequel ledit paramètre de forme d'impulsion (P) est généré numériquement.

7. Procédé selon l'une quelconque des revendications précédentes, dans lequel le facteur d'étalonnage (K) est, pour la stabilisation des signaux mesurés, déterminé à l'aide d'une fonction mathématique prédéterminée à partir des paramètres de forme d'impulsion (P).

8. Procédé selon la revendication précédente, dans lequel la fonction prédéterminée est sensiblement linéaire.

9. Procédé selon la revendication 7, dans lequel la fonction prédéterminée est sensiblement polynôme.

10. Procédé tel que revendiqué dans l'une des revendications 7 à 9, dans lequel la fonction prédéterminée est stockée dans le détecteur d'une manière lisible.

11. Procédé selon l'une quelconque des revendications précédentes, dans lequel le facteur d'étalonnage (K), pour la stabilisation des signaux mesurés, est corrélé à une table d'étalonnage prédéterminée, qui contient les paramètres de forme d'impulsion (P).

12. Procédé selon la revendication précédente, dans lequel la table d'étalonnage est prédéterminée et est stockée dans le détecteur d'une manière lisible.

13. Procédé selon l'une quelconque des revendications précédentes, dans lequel la détermination du facteur d'étalonnage (K) est effectuée à partir du paramètre de forme d'impulsion (P), au cours de la mesure en temps réel.

**14.** Détecteur de scintillation pour la mesure d'un rayonnement, de préférence un rayonnement ionisant, comprenant

- un milieu absorbant au moins partiellement le rayonnement à mesurer,
- des moyens de conversion de l'énergie de rayonnement absorbée par le milieu en une charge électrique, la charge électrique étant au moins partiellement proportionnelle à l'énergie du rayonnement,
- des moyens pour la détermination des facteurs d'étalonnage (K) dépendant de la température, qui est dans une relation sensiblement fixe par rapport au temps de diminution d'intensité ($\tau$) du milieu;
- des moyens pour la stabilisation des signals de sortie du détecteur, qui est sensiblement proportionnelle à l'énergie du rayonnement, à l'aide du facteur d'étalonnage (K),

**caractérisé en ce que**
- les moyens pour déterminer les facteurs d'étalonnage (K) comprennent :

des moyens pour obtenir des paramètres de forme d'impulsion (P) par l'évaluation de la forme des signaux de détection enregistrés, le facteur d'étalonnage (K) étant choisi selon un rapport prédéterminé avec les paramètres de forme d'impulsion, comprenant un moyen destiné à déterminer l'une des variables essentielles suivantes à partir de laquelle le paramètre de forme d'impulsion (P) est déterminé :

la longueur du signal de sortie de forme unipolaire du détecteur ;
le temps de montée du signal de sortie de forme unipolaire du détecteur ;
le temps entre le début du signal et le passage par zéro du signal de sortie de forme bipolaire du détecteur.

**15.** Détecteur de scintillation selon la revendication précédente, dans lequel le milieu absorbant le rayonnement mesuré comprend un cristal à scintillation, de préférence l'iodure de sodium (NaI), le cadmium tungstate (CWO), l'iodure de césium (CsI), le germanate de bismuth (BGO), le chlorure de lanthane (LaCl$_3$), ou le bromure de lanthane (LaBr$_3$).

**16.** Détecteur de scintillation selon la revendication précédente, dans lequel les moyens pour convertir en charge électrique l'énergie absorbée par le milieu, qui est au moins partiellement proportionnelle à l'énergie de rayonnement, comprennent un détecteur de lumière, de préférence un photomultiplicateur, comportant une photocathode ayant un multiplicateur relié à elle, ou une photodiode, de préférence avec un préamplificateur sensible à la charge relié à elle, ou un photomultiplicateur hybride ou une photodiode à avalanche.

**17.** Détecteur de scintillation selon l'une des revendications précédentes 14 à 16, dans lequel la charge électrique est convertie en un signal de courant (S) au moyen d'un circuit d'amplification et de formation d'impulsions.

**18.** Détecteur de scintillation selon la revendication précédente, dans lequel un temps (t) est mesuré entre deux points définis dans le signal bipolaire modifié, de préférence entre le point du front montant du signal au niveau duquel il a atteint un tiers de sa hauteur, et le point au niveau duquel le niveau du signal est de 0 volts, le temps (t) ainsi mesuré étant une mesure du temps de diminution d'intensité ($\tau$).

**19.** Détecteur de scintillation selon l'une quelconque des revendications précédentes 14 à 18, dans lequel le signal électrique est échantillonné de façon numérique, dans lequel l'échantillonnage à une fréquence d'échantillonnage de préférence entre 1 et 1000 MHz, de préférence à un fréquence d'échantillonnage compris entre 5 et 100 MHz, et de plus grande préférence à un fréquence d'échantillonnage compris entre 10 et 25 MHz, est effectuée, et le traitement ultérieur du signal se fait de manière numérique.

**20.** Détecteur de scintillation selon la revendication précédente, dans lequel les paramètres de l'exponentielle de front descendant du signal de courant (S), qui sont une mesure directe du temps de diminution d'intensité ($\tau$), sont déterminés par traitement numérique du signal.

**21.** Détecteur de scintillation selon l'une quelconque des revendications précédentes 14 à 20, dans lequel le paramètre proportionnel au temps de diminution d'intensité ($\tau$) est comparé à une table d'étalonnage, et corrige les signaux de mesure avec la valeur résultante pour étalonner les valeurs mesurées.

Figur 1

## Figur 2a

## Figur 2b

## Figur 2c

## Figur 2d

## Figur 2e

## Figur 2f

Figur 3

Figur 4

## Figur 5a

## Figur 5b

## Figur 5c

## Figur 5d

$$y = 2E\text{-}15x^6 - 5E\text{-}12x^5 + 7E\text{-}09x^4 - 5E\text{-}06x^3 + 0{,}0018x^2 - 0{,}3768x + 32{,}894$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 06258446 B

**In der Beschreibung aufgeführte Nicht-Patentliteratur**

- **J.S. SCHWEITZER ; W. ZIEHL.** *IEEE Trans. Nucl. Sci.,* 1983, vol. NS-30 (1), 380